# NEUE EUROPÄISCHE PATENTSCHRIFT

(11) **EP 2 520 461 B2**
(45) Veröffentlichungstag und Bekanntmachung des Hinweises auf die Entscheidung über den Einspruch: **28.06.2017**
(45) Hinweis auf die Patenterteilung: 13.11.2013
(21) Anmeldenummer: 12001558.1
(22) Anmeldetag: 07.03.2012
(51) Int. Cl.: B60P 3/32, B60P 3/36

(54) **Wohnmobil mit Mehrzweck-Doppelboden**
Mobile home with multipurpose raised floor
Mobile home doté d'un plancher surélevé polyvalent

(30) Priorität: 15.04.2011 DE 202011005281 U; 16.06.2011 DE 102011106603
(43) Veröffentlichungstag der Anmeldung: 07.11.2012
(73) Patentinhaber: Knaus Tabbert GmbH, 94118 Jandelsbrunn (DE)
(72) Erfinder: Tregner, Michael, 88316 Isny im Allgäu (DE); Horvath, Robert, 94078 Freyung (DE)
(74) Vertreter: advotec.

(56) Entgegenhaltungen:
- DE-A1- 3 242 564
- DE-A1- 4 133 401
- US-A- 4 728 144
- US-A- 5 921 615
- US-A1- 2006 012 219
- US-B1- 7 004 525
- US-B2- 7 082 685
- US-B2- 7 082 685
- Auszug aus der Zeitschrift "Reisemobil" Ausgabe 2-2009

## Beschreibung

Die Erfindung betrifft ein Fahrzeug, insbesondere Wohnmobil oder Wohnwagen, mit einem sich über die Länge des Wohnbereichs erstreckenden Doppelboden zur Aufnahme von funktionellen Einheiten, wie beispielsweise Gasflasche, Heizung und dergleichen gemäß dem Oberbegriff des Anspruchs 1. Ein derartiges Fahrzeug ist aus DE 41 33 401 A1 bekannt.

Aus den Schriften US 7 082 685 B2 und US 2006 / 012219 A1 sind bei Reisemobilen verschiedene Aufbauten für das Fahrgestell nebst der den Wohnbereich tragenden Bodenbaugruppe bekannt. Alle bekannten Fahrgestelle weisen jedoch Rahmenlängsträger auf, an welchen ein Doppelboden befestigt ist. Der Doppelboden setzt sich zusammen aus einem oberen und unteren Boden. Der obere Boden ist eben ausgeführt und erstreckt sich zumindest teilweise über den Fußboden des Wohnbereichs. Unterhalb des oberen Bodens ist der untere Boden angeordnet, so dass sich zwischen diesen und an der Fahrzeugaußenseite ein Raum ausbildet. Grundsätzlich besteht die Forderung den Raum unterhalb des Wohnbereichs zur Unterbringung von funktionellen Gegenständen, wie beispielsweise eine Heizung, Gasflaschen, Schmutzwassertanks oder Frischwassertanks sowie als Stauraum zur Verfügung zu stellen. Hierbei gilt es jedoch, den Boden des Wohnbereichs bei der Ausführung möglichst eben zu gestalten, um somit eine möglichst große Freiheit hinsichtlich der Ausführung des Wohnraums zu gewährleisten. Zur Lösung dieses Problems schlägt die Schrift DE 199 29 040 A1 vor, einen Doppelboden einzusetzen, dereine obere ebene Bodenplatte aufweist. Insofern kann der Wohnraum weitestgehend beliebig geschaltet werden ohne Einschränkungen aufgrund einer unebenen Bodengestaltung zu unterliegen.

Zur Unterbringung der funktionellen Einrichtungen und Gerätschaften wird hierzu der Doppelboden derart gestaltet, dass zwischen der oberen ebenen Bodenplatte und unteren Bodenelementen einen Funktionsraum gebildet wird, innerhalb dessen die Gerätschaften entsprechenden Platz finden. Da sich mittig durch das Fahrzeug das Fahrgestell über einen Großteil der Länge des Fahrzeugs erstreckt, wird zur Gewinnung entsprechenden Funktionsraums im Stand der Technik der untere Boden derart ausgeführt, dass zwischen den Rahmenlängsträgern des Fahrgestells jeweils vertiefte Bereiche geschaffen werden. Ansonsten liegt der untere Boden auf dem Fahrgestell auf und erstreckt sich hierbei beidseitig bis zu den Fahrzeugaußenseiten. Diese Ausführungsart ermöglicht zum einen eine vorteilhafte Isolierung des Funktionsraums sowie eine stabile und tragfähige Gestaltung des Doppelbodens.

Die Schrift US 5 921 615 A schlägt vor, dass der untere Boden mehrere Abschnitte aufweist, welche zwischen den Rahmenlängsträgern und der Fahrzeugaußenseite angeordnet sind. Sie erstrecken sich über die Länge des Wohnbereichs und lassen Raum für ein Radhaus.

Von besonderem Nachteil ist jedoch die Tatsache, dass zur Unterbringung besonders sperriger Gegenstände, namentlich insbesondere die in aller Regel eine mitgeführte Gasflasche, seitlich der Rahmenlängsträger besondere Aufhahmefächer mit größerer Aufnahmehöhe geschaffen werden. Somit verbleibt trotz vorteilhaft isoliertem Funktionsraum und tragfähigem Doppelboden jedoch der Nachteil, dass aufgrund des Platzbedarfs vielfach der untere Boden zerklüftet gestattet werden muss und wenig Raum für sperrige Gerätschaften bietet.

Aufgabe der vorliegenden Erfindung ist es daher, die Gestalt eines Doppelbodens für die Verwendung bei Wohnmobilen oder Wohnwagen oder dergleichen zu verbessern und hierbei den Stauraum zu optimieren.

Die vorliegende Aufgabe wird durch eine erfindungsgemäße Ausführungsform gemäß dem Anspruch 1 gelöst.

Vorteilhafte Ausführungsformen sind Gegenstand der Unteransprüche.

Ein gattungsgemäßes Fahrzeug, insbesondere Wohnmobil oder Wohnwagen, umfasst ein Fahrgestell, welches wiederum als wesentlichen Bestandteil einen linken und einen rechten Rahmenlängsträger aufweist. Nicht relevant für die vorliegende Erfindung ist der sich vor einem Wohnbereich des Fahrzeugs befindende Bereich des Fahrzeugs, insbesondere das Fahrerhaus eines Wohnmobils. Zu betrachten ist der Unterbau unterhalb des Wohnbereichs, wobei an den Rahmenlängsträgern ein Doppelboden angebracht ist. Unerheblich ist weiterhin, in welcher Art die Verbindung zwischen den Rahmenlängsträgern und dem Doppelboden hergestellt wird. Insbesondere ist es nicht relevant, ob der Doppelboden direkt am Rahmenlängsträger anliegt und direkt daran befestigt ist, oder ob der Doppelboden beispielsweise über am Rahmenlängsträger angeschweißte Konsolen gehalten wird. Zumindest werden auftretende Lasten vom Doppelboden auf die Rahmenlängsträger übertragen.

Weiterhin weist der Doppelboden obere und untere Tragelemente auf. Das untere Tragelement umfasst zumindest einen rechten und einen linken ebenen und auf gleicher Höhe unterhalb der Rahmenlängsträger liegenden Bodenplattenabschnitt. Hierbei erstrecken sich die Bodenplattenabschnitte auf der Länge des Wohnbereichs unter Freisparung eines Radhauses. Insofern verläuft der Bodenplattenabschnitt vom Fahrerhaus bis zum Radhaus und vom Radhaus bis zum Heck bzw. bis zum Ende des Doppelbodens. In der Breite überstreckt der Bodenplattenabschnitt jeweils den Bereich vom Rahmenlängsträger bis zur Fahrzeugaußenseite. Gleichfalls sind die Bodenplattenabschnitte jeweils bis an die Seitenwände des Fahrzeugs herangeführt und mit diesen verbunden. Hierbei besteht das gattungsgemäße obere Tragelement aus zumindest einer abschnittsweise über die Erstreckung eines Wohnbereichs ebene und den Boden des Wohnbereichs bildende oberen Bodenplatte. Besonders vorteilhaft ist es, wenn eine durchgehende. einstückige Platte verwendet wird. Gleichfalls ist es möglich, die obere Bodenplatte aus mehreren einzelnen Plattensegmenten zu einer Bodenplatte zusammen zu fügen. Insofern bezieht sich das Element Bodenplatte auf die funktionale Einheit und ist nicht auf eine in der Herstellung ggf. verwendbare einzelne Platte beschränkt. Wenngleich die Bodenplatte den gesamten Wohnbereich vorteilhaft überstrecken soll, so sind funktionell sinnvolle oder erforderliche Aussparungen hiervon ausgenommen. Dies betrifft zum einen den mit in der Regel mit Treppenstufen versehenen Eingangsbereich zum Wohnraum sowie ebenso mögliche Ausnehmungen für die Radhäuser, sofern die obere Bodenplatte nicht oberhalb der Radhäuser angeordnet ist bzw. nicht sinnvoll oberhalb angeordnet werden kann.

Bei entsprechenden Fahrzeugen wird der Doppelboden zur Unterbringung verschiedenster Funktionseinrichtungen verwendet. Insofern bildet der Raum zwischen der oberen Bodenplatte und den unteren Tragelementen einen Funktionsraum, wobei der Funktionsraum an der rechten und linken Fahrzeugaußenseite von Seitenwänden und/oder Seitenklappen umgeben ist. Wenngleich es nicht für alle Funktionseinrichtungen zwingend erforderlich ist, so ist es dennoch von großem Vorteil, wenn diese gleichfalls wie der Wohnraum gegen die Außentemperatur isoliert ist. Entsprechend ist der Funktionsraum mittels der Seitenklappen bzw. Seitenwände sowie den Tragelementen gegenüber der Umwelt thermisch isoliert. Zu welchem Zweck der Funktionsraum konkret Verwendung findet ist hierbei zunächst unerheblich. Zumindest steht ein funktioneller Raum zur Verfügung, zur Unterbringung verschiedenster Gerätschaften oder Einrichtungen, wobei dieser ebenso als Stau- oder Lagerraum genutzt werden könnte.

Erfindungsgemäß ist nunmehr vorgesehen, dass sich der Doppelboden im Heckbereich über die Rahmenlängsträger hinaus erstreckt, wobei ein Heckbodenabschnitt im Anschluss an die Rahmenlängsträger eben und auf gleicher Höhe die Bodenplattenabschnitte verbindet. Insofern bildet der Heckbodenabschnitt mit den beiden Bodenplattenabschnitten unter Vernachlässigung der Radhäuser eine ebene Platte in Form eines U. Wahlweise können hierbei die Bodenplattenabschnitte sowie der Heckbodenabschnitt einstückig ausgeführt werden oder ebenso mehrteilig aneinandergesetzt werden. Gleichfalls wie bei den Bodenplattenabschnitten gilt, dass ebenso der Heckbodenabschnitt Teil einer größeren Bodenplatte sein kann. Somit kann der Wohnraum über das Fahrgestell hinaus vergrößert werden unter Erzielung eines vorteilhaft großen Funktionsraums unter anderem durch den Bereich zwischen dem Ende des Fahrgestells und dem Ende des Wohnraums bzw. des Doppelbodens.

Welchen Aufbau die obere Bodenplatte bzw. Tragelemente haben ist zunächst unerheblich. Insofern kommt ein einschichtiger oder mehrschichtiger, unverstärkter oder verstärkter Aufbau in Frage. Zur Erzielung einer hohen Tragfähigkeit sowie zur vorteilhaften Isolierung bietet sich eine Sandwich-Bauweise an, bei der ein isolierender Kem geringer Dichte von zwei höherfesten Schichten umgeben ist. In den Bereichen höherer statischer bzw. dynamischer Lasten können innerhalb der Bodenplatte bzw. der Tragelemente Versteifungsträger, bzw. in Form von Stahlprofilen eingesetzt sein.

Durch die Anordnung der Bodenplattenabschnitte als Tragelemente des Doppelbodens unterhalb des Rahmenlängsträgers außerhalb desselben wird ein erhebliches Mehr an Stauraum im Doppelboden gewonnen. Hierdurch wird es insbesondere ermöglicht, sperrige Gegenstände, welche ansonsten nur schwer unterzubringen waren, im Funktionsraum des Doppelbodens anzubringen. Ebenso kann ein Stauraum bzw. Lagerplatz für beispielsweise Gepäck geschaffen werden, so dass auch ggf. Koffer einen Platz finden können. Wenngleich die Unterbringung von schweren Gerätschaften oder Einrichtungen die keine Zugänglichkeit erfordern in der Fahrzeugmitte zwischen den Rahmenlängsträgern vorteilhaft ist und insofern unverändert genutzt werden kann, so blieb bisher im Stand der Technik der Bereich beidseitig der Rahmenlängsträger im Wesentlichen ungenutzt. Durch die erfindungsgemäße Ausführungsform werden neue Potentiale in Form eines größeren Funktionsraums erschlossen, so dass dem Hersteller des Fahrzeugs eine größere Gestaltungsfreiheit hinsichtlich der Anordnung der Gerätschaften und Einrichtungen ermöglicht wird. Ebenso steht dem Nutzer des Fahrzeugs ein erweiterter Stau- und Lagerraum zur Verfügung.

Alternativ zu einer Erweiterung des Funktionsraums ist es bei insgesamt gleichbleibendem Funktionsraum zu Ausführungen aus dem Stand der Technik ebenso möglich die Lage der oberen Bodenplatte abzusenken. Somit kann zum einen die Raumhöhe im Wohnbereich vergrößert werden und/oder ebenso die Fahrzeuggesamthöhe abgesenkt werden.

Die beidseitig neben den Rahmenlängsträgern liegenden Bodenplattenabschnitte können hierbei von jeweils einzelnen Bauteilen gebildet werden, aber ebenso Bestandteil und insofern Abschnitt einer größeren Bodenplatte sein. Weiterhin ist es unerheblich, ob ein Bodenplattenabschnitt aus einen einzelnen Bauteil besteht oder sich seinerseits aus einer Mehrzahl von einzelnen Bauteilen zusammensetzt. Wesentlich ist hierbei, gleichfalls wie bei der oberen Bodenplatte, die funktionale Aufgabe der auf linker und rechter Seite der Rahmenlängsträger erforderlichen Bodenplattenabschnitte.

Unerheblich ist weiterhin, ob der Doppelboden zum Ende und/oder Anfang des Wohnbereichs exakt quer zur Längserstreckung verläuft oder alternativ schräg oder abgewinkelt. Wesentlich ist, dass der Doppelboden unterhalb des Wohnbereichs zumindest die Rahmenlängsträger überstreckt, wobei beidseitig der Rahmenlängsträger die abgesenkten Bodenplattenabschnitte unter Bildung des Funktionsraums vorhanden sind.

Besonders vorteilhaft bezüglich der Schwerpunktlage bezogen zum Fahrzeug ist die Anordnung des Frischwasser- und/oder Abwassertanks in der Mitte des Fahrzeugs. Hierbei sind diese zur Ausnutzung des begrenzt vorhandenen Platzes zumindest bereichsweise zwischen den Rahmenlängsträgern anzuordnen, wobei der Frischwasser- und/oder Abwassertank derart zu befestigen ist, dassdessen Lastsich auf kurzen Kraftwegen auf den Rahmenlängsträgern abstützen kann. Um einen möglichst tiefen Schwerpunkt zu erhalten ist vorteilhaft der Frischwasser- und/oder Abwassertank nach unten bis zum Niveau der Bodenplattenabschnitt herabzuziehen. Im Falle einer unter den Rahmenlängsträgern durchlaufenden unteren Bodenplatte können diese ggf. auf dieser aufliegen. Sofern der Bereich unterhalb des Frischwasser- und/oder Abwassertanks nicht von einer unteren Bodenplatte abgedeckt ist, ist eine unter den Tanks zum Fahrzeugboden angeordnete Isolierung erforderlich. Hierbei ist es besonders vorteilhaft, wenn die Isolierung mit den umgebenden Bodenplattenabschnitten eineweitgehend durchlaufende geschlossene Ebene bildet.

Um eine Zugänglichkeit zu den im Funktionsraum installierten Gerätschaften zu erhalten können in der oberen Bodenplatte und/oder den unteren Tragelementen entsprechende mit jeweils Deckeln verschließbare Öffnungen vorgesehen sein. Wenn die Zugänglichkeit nur für den Notfall bzw. Wartungsfall erforderlich ist, können diese bei der oberen Bodenplatte beispielsweise unterhalb eines Bodenbelags im Wohnbereich verdeckt sein.

Besonders vorteilhaft ist es, wenn die den Bodenbereich beidseitig umgebenden Seitenwände zusammen mit den vorhandenen Seitenklappen die Seitenwände des Funktionsraums bilden. Dies führt zu der Ausführung, dass die Seitenwände am Wohnraum durchgezogen sind bis zum unteren Ende des Doppelbodens. Hierbei gilt es, die jeweilige Seitenwand mit der oberen Bodenplatte sowie mit dem jeweiligen Bodenabschnitt zu verbinden. Durch die Verbindung der Seitenwände mit der oberen Bodenplatte sowie den unteren Bodenplattenabschnitten entsteht eine Art Kastenform, welche erheblich zur Erhöhung der Steifigkeit der gesamten Struktur beiträgt. Sofern erforderlich, können Seitenklappen vorhanden sein, um die Zugänglichkeit zu dem entsprechenden Stau- bzw. Lagerraum zu gewährleisten.

Besonders vorteilhaft ist die Ausführung des Doppelbodens, wenn im Funktionsraum auf einem Bodenplattenabschnitt zumindest eine für den Einsatz im Wohnmobil handelsübliche Gasflasche stehend gelagert werden kann. Wenngleich es aufgrund der typischen Größe, insbesondere der Bauhöhe einer Gasflasche nicht möglich ist, diese vollständig stehend unterhalb der oberen Bodenplatte anzuordnen, ist die erforderliche Aufnahme und Befestigung der Gasflasche deutlich einfacher zu gestalten, da keine zusätzlichen Träger wie im Stand der Technik erforderlich sind. Die Last kann hingegen direkt von dem Bodenplattenabschnitt aufgenommen werden.

Hinter einer Eingangstür kann in besonders vorteilhafter Weise ein Bodenplattenabschnitt als Trittstufe zum Wohnbereich Verwendung finden. Zu berücksichtigen ist hinsichtlich der Auslegung die auf einen Tritt maximal auftretende Last, welche insofern vom Bodenplattenabschnitt getragen werden muss. Ansonsten gilt es, den Bereich des Bodenplattenabschnitts alsTrittstufe mit gegebenenfalls einem Abriebschutz, einer Rutschsicherung und/oder einem Wasserablauf bzw. Ablaufrinnen zu versehen. Dieses kann im einfachsten Fall eine entsprechend profilierte Gummimatte sein. Somit wird bei einer wiederholten Verwendung der Trittstufe bei verschiedensten Wettersituationen eine unvermindert langjährige Verwendbarkeit gewährleistet.

Zudem sind die obere Bodenplatte und die unteren Tragelemente mit einer Mehrzahl von senkrechten Wandabschnitten verbunden. Durch die vielfache Verbindung zwischen der oberen Bodenplatte und den unteren Tragelementen wird eine erhöhte Stabilität und Tragfähigkeit des Doppelbodens erreicht. Weiterhin können die Wandabschnitte zugleich Verwendung finden, um funktionell getrennte Bereiche im Funktionsraum zu schaffen. Dies kann insbesondere dahingehend vorteilhaft sein, wenn es beispielsweise gilt, einen Stauraum für Gepäck von der untergebrachten Heizung zu trennen, wobei hierzu die Wandabschnitte beispielsweise eine Plattenform aufweisen können. Sofern keine durchgehend räumliche Trennung erforderlich ist, können die Wandabschnitte ebenso in Art einer Verstrebung oder mittels profilierter Träger gebildet werden. Wesentlich ist in diesem Fall, dass eine Lastübertragung zwischen der oberen Bodenplatte und den unteren Tragelementen erfolgen kann.

Zudem umfassen die unteren Tragelemente eine Tragplatte, welche das Fahrgestell überdeckt und darauf aufliegt. Nicht erforderlich ist es, dass die Tragplatte das gesamte Fahrgestell im Wohnbereich überdeckt. Hierbei kann ebenso vorgesehen sein, dass die Tragplatte nur einen Teilabschnitt des Fahrgestells überdeckt. Weiterhin kann die Tragplatte eine oder eine Mehrzahl von Aussparungen aufweisen, um entsprechenden Einbausituationen Rechnung zu tragen. Beispielsweise kann in einer Vertiefung eine Heizung mittig zwischen den Rahmenlängsträgern eingebaut sein. Zumindest liegt die Tragplatte lasttragend auf den Rahmenlängsträgern auf. Nicht relevant ist es hierbei, ob die Auflage und Befestigung direkt erfolgt oder ob hier Abstandselemente oder Konsolen die Tragplatte von den Rahmenlängsträgern trennen. Zur Erzielung eines möglichst großen Funktionsraums ist es vorteilhaft, den Abstand möglichst gering zu halten. Da sich die Tragplatte oberhalb der Rahmenlängsträger befindet und die Bodenplattenabschnitte unterhalb der Rahmenlängsträger, gilt es mittels senkrechter Wandabschnitte die Tragplatte mit den Bodenplattenabschnitten zu verbinden. Bei der Ausführung der senkrechten Wandabschnitte zwischen Tragplatte und Bodenplattenabschnitten ist es besonders vorteilhaft, wenn diese in einer isolierten Ausführungsform gewählt werden, um eine entsprechend gute Isolierung des Funktionsraums zu erhalten.

Wenngleich sich der Aufbau des Doppelbodens als aufwendiger erweisen könnte, ist es besonders vorteilhaft, wenn die unteren Bodenplattenabschnitte und sofern vorhanden der Heckbodenabschnitt von einer sich, unter Aussparung von Freiräumen für die Radaufhängung und Radhäuser, unterhalb der Rahmenlängsträger durchgehend von der einen bis zur anderen Fahrzeugaußenseite erstreckenden unteren Bodenplatte gebildet werden. Das heißt, dass parallel zur oberen Bodenplatte eine untere Bodenplatte eingesetzt wird, welche unter Vernachlässigung der Radaufhängung und Radhäuser eine zur oberen Bodenplatte weitgehend gleiche Erstreckung aufweist. Aufgrund der durchgehenden unteren Bodenplatte wird insofern ein nochmals vergrößerter Funktionsraum erreicht, so dass der vollständige Bauraum bis an die Rahmenlängsträger sowie zwischen den Rahmenlängsträgern zur Unterbringung von Gerätschaften bzw. Funktionseinrichtungen zur Verfügung steht. Ebenso werden die thermischen Eigenschaften verbessert, da nunmehr eine durchgehende ebene Bodenplatte vorhanden ist und nicht wie im alternativen Fall eine mehrfach versetzte Struktur zwischen den Bodenplattenabschnitten und Tragplatten mit dazwischen angeordneten Wandabschnitten. Hinsichtlich der Montage ist lediglich zu berücksichtigen, dass kein vorgefertigter Doppelboden auf das Fahrgestell gesetzt werden kann, sondern vielmehr der Doppelboden um das Fahrgestell herum zu montieren ist.

Weiterhin ist es vorteilhaft, wenn sich im Heckbereich an den Doppelboden eine Garage anschließt Hierbei ist ein Garagenboden eben und auf gleicher Höhe zum Heckbodenabschnitt bzw. den Bodenplattenabschnitten bzw. der unteren Bodenplatte auszuführen. Insofern kann besonders vorteilhaft der Garagenboden einstückig mit dem angrenzenden Bodenbereich des Doppelbodens gebildet werden.

Bei Vorhandensein einer Garage im Heckbereich ergeben sich für den Funktionsraum verschiedene Zugangsmöglichkeiten. Insofern kann neben der Verwendung von Seitenklappen ebenso in vorteilhafterweise vorgesehen werden, dass der Bereich zwischen der Garage und dem Radhaus zur Garage hin offen gestaltet ist und insofern von der Garage aus zugänglich ist.

Wenngleich bei in der Beschreibung vorheriger Ausführungsformen von einer unterhalb des Wohnbereichs liegenden Radachse ausgegangen wird und dies den Regelfall darstellt, wobei ebenso eine Doppelachse hierunter verstanden wird, ist die Erfindung nicht nur auf eine derartige Ausführung beschränkt. In gleicherweise ist es möglich, den Doppelboden auch einzusetzen, wenn keine Radachse auf der Länge des Wohnbereichs vorhanden ist oder beispielsweise sich der Wohnbereich mit dem Doppelboden bis zu einer Vorderachse erstreckt. Zumindest sind die beidseitigen Bodenplattenabschnitte jeweils auf der Länge des Wohnbereichs anzuordnen unter Ausnahme des für Radhäuser erforderlichen Platzes.

In den nachfolgenden Figuren werden beispielhaft verschiedene Ausführungsformen eines erfindungsgemäßen Doppelbodens skizziert.

Es zeigen:
- Fig. 1: schematisch ein Fahrzeug mit Doppelboden 22 zur Verwendung als Wohn-mobil 01;
- Fig. 2: einen Querschnitt durch den Doppelboden 22 im Bereich vor der Hinterradachse;
- Fig. 3: einen Querschnitt durch den Doppelboden 22 im Bereich der Hinterradachse;
- Fig. 4: einen Querschnitt durch einen alternativen Doppelboden 35;
- Fig. 5: ein Ausschnitt eines Längsschnitts des Doppelbodens 35 zur Ausführung gemäß Fig. 4.

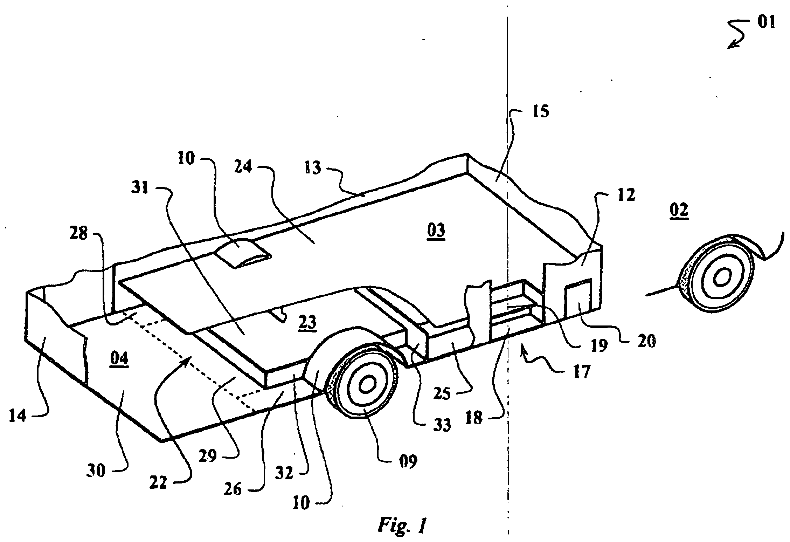

Die **Figur 1** zeigt schematisch ein Wohnmobil 01 mit einem Wohnbereich 03 hinter einem nicht näher dargestellten Fahrerhaus 02 und im Heckbereich liegender Garage 04. Unter dem Wohnbereich 03 befindet sich eine beispielhafte Ausführungsform eines erfindungsgemäßen Doppelbodens 22. Dieser umfasst zunächst einmal die durchgehend ebene oben liegende obere Bodenplatte 24. Folglich bildet die obere Bodenplatte 24 den Boden des Wohnbereichs 03 und erstreckt sich im Wesentlichen auf dessen vollständige Größe. Aussparungen in der oberen Bodenplatte 24 erfolgen aufgrund der Lage der Radhäuser 10 sowie für den Eingangsbereich 17. Ebenso kann es Aussparungen für beispielsweise eine stehende Gasflasche geben.

Als untere Tragelemente des Doppelbodens 22 kommen zunächst einmal die erfindungsgemäß beidseitig der Rahmenlängsträger angeordneten Bodenplattenabschnitte 25-28 zum Einsatz. Hierbei erstrecken sich die Bodenplattenabschnitte 25-28 auf rechter Seite sowie auf linker Seite des Fahrzeugs 01 über die Länge des Wohnbereichs 03 und decken den Bereich zwischen dem Rahmenlängsträger 07 und der jeweiligen Fahrzeugaußenseite ab. Ausgenommen sind hierbei die von den Radhäusem 10 eingenommenen Bauräume. Derlinke und rechte hintere Bodenplattenabschnitt 26, 28 wird heckseitig im Bereich des Doppelbodens 22 verbunden durch den Heckbodenabschnitt 29, welcher in gleicher Ebene liegt. An den Heckbodenabschnitt 29 sowie den rechten und linken hinteren Bodenplattenabschnitten 26, 28 schließt sich der Garagenboden 30 an.

Unerheblich ist es, ob die gemeinsam in einer Ebene bündig angrenzenden Bodenplattenabschnitte 25-28, der Heckbodenabschnitt 29 sowie der Garagenboden 30 einstückig gebildet sind oder aus mehreren Elementen zusammengesetzt sind. Wesentlich ist jedoch, dass sich funktional eine ebene Platte ergibt. In der Umsetzung ist es insofern beispielsweise möglich, den Heckbodenabschnitt 29 mit dem Garagenboden 30 einstückig auszuführen.

Im Bereich des Fahrgestells 06 werden die unteren Tragelemente des Doppelbodens 22 von einer Tragplatte 31 gebildet. Diese 31 liegt insofern auf den Rahmenlängsträgern 07 des Fahrgestells 06 auf und überdeckt dieses 07 beidseitig. Die Bodenplattenabschnitte 25-28 sind hierbei mittels senkrechter Wandabschnitte 32 mit dem Tragboden 31 verbunden. Die Verbindung zwischen den unteren Tragelementen, d.h. den Bodenplattenabschnitten 25-28 sowie dem Heckbodenabschnitt 29 und der oberen Bodenplatte 24 wird mittels ebenfalls senkrechter Wandabschnitte 33 realisiert. Diese 33 haben hierbei die Aufgabe, den durch den Doppelboden 22 gebildeten Funktionsraum 23 zwischen oberer Bodenplatte 24 und der Tragplatte 31 bzw. den Bodenplattenabschnitten 25 bis 28 sowie dem Heckbodenabschnitt 29 zu unterteilen und ebenso eine statische Verbindung zwischen den Elementen 22 bzw. 24-29, 31 herzustellen. Insofern wird durch die Gestaltung des Doppelbodens 22 mit der Verwendung von innenliegenden Wandabschnitten 33 eine besonders stabile und tragfähige Kastenstruktur erzielt.

Innerhalb des zur Verfügung stehenden Funktionsraums 23 können verschiedenste Funktionseinrichtungen bzw. Gerätschaften angeordnet werden. Weiterhin kann der zur Verfügung stehende Funktionsraum 23 als Lager oder Staufläche Verwendung finden. Um die Zugänglichkeit zu entsprechenden Stauräumen zu gewährleisten sind vorteilhafte Seitenklappen 20 im Außenbereich angebracht. Um einen Wärmeverlust im Funktionsraum 23 zu verhindern und insbesondere einen Frostschutz zu gewährleisten ist der Funktionsraum 23 ebenso wie der Wohnraum 03 thermisch zu isolieren. Zu diesem Zweck gilt es, insbesondere die Bodenplattenabschnitte 25-28, den Heckbodenabschnitt 29, die Tragplatte 31 sowie die außen liegenden Seitenwände 12, 13 und ebenso die zum Fahrgestell hin liegenden senkrechten Wandabschnitte 32 als thermisch isolierende Platten auszuführen.

Zur Erzielung einer hohen Steifigkeit des Doppelbodens 22 bzw. des gesamten Aufbaus des Wohnmobils 01 ist es besonders vorteilhaft, wenn, wie dargestellt, die rechte Seitenwand 12, die linke Seitenwand 13, die hintere Seitenwand 14 sowie die vordere Seitenwand 15 vom Wohnbereich 03 bis zu den unteren Bodenplattenabschnitten bzw. dem Garagenboden durchgezogen wird und hierbei die obere Bodenplatte sowie die unteren Bodenplattenabschnitte mit den entsprechenden Seitenwänden 12 bis 15 verbunden werden.

Wenngleich hier ansatzweise ein Wohnmobil 01 anskizziert wird, kann die Ausführungsform ebenso für einen Wohnwagen als Anhänger und ebenso für andersartige Fahrzeugaufbauten zu Wohnzwecken Verwendung finden. Maßgeblich ist der Einsatz des Doppelbodens 22 unterhalb des Wohnbereichs 03. Insofern ist es in vorliegender Ausführung nicht relevant, ob beispielsweise die vordere Seitenwand 15 vorhanden ist, oder alternativ eine zum Fahrerhaus hin offene Bauweise vorliegt.

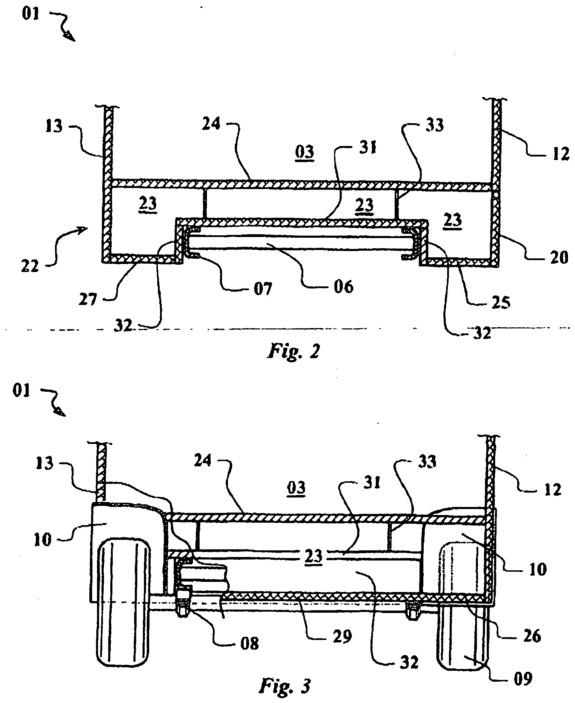

Die **Figur 2** skizziert einen Schnitt durch die beispielhaft skizzierte Ausführungsform des Wohnmobils 01 gemäß Fig. 1 in einem Bereich abseits der Hinterräder. Zu erkennen ist im beispielhaften Aufbau des Doppelbodens 22 wiederum die obere durchgehende ebene Bodenplatte 24 oberhalb dessen sich der Wohnbereich 03 befindet, sowie die unten liegenden beidseitig außerhalb des Fahrgestells 06 angeordneten Bodenplattenabschnitte 25 auf rechter Seite bzw. 27 auf linker Seite. Auf den Rahmenlängsträgern 07 des Fahrgestells 06 aufliegend befindet sich die Tragplatte 31. Diese 31 ist wiederum mittels senkrechter Wandabschnitte 32 mit den jeweiligen Bodenplattenabschnitten 25, 27 verbunden. Entsprechend entstehtzwischen deroberen Bodenplatte 24 des Doppelbodens 22 und den unteren Bodenplattenabschnitten 25, 27 bzw. der Tragplatte 31 der Funktionsraum 23 zur Aufnahme entsprechender Funktionseinrichtungen, Gerätschaften oder dergleichen. Zur Unterteilung sowie zur Versteifung befinden sich innen liegend im Funktionsraum 23 gleichfalls senkrechte Wandabschnitte 33. Nach außen hin wird der Funktionsraum 23 des Doppelboden 22 von den Seitenwänden 12, 13 des Wohnmobils 01 bzw. von Seitenklappen 20 abgeschlossen. In dieser Figur wird offensichtlich, wie durch die vorteilhafte Lage der seitlichen Bodenplattenabschnitte 25, 27 ein effektiver großvolumiger Funktionsraum 23 gewonnen wird.

Wenngleich nicht skizziert, ist es ebenso möglich im Bereich zwischen den beiden Rahmenlängsträgern 07 des Fahrgestells jeweils sich von der Tragplatte 31 nach unten erstreckende Aufnahmebereiche zu schaffen. Dies bietet sich insbesondere zur Aufnahme derjenigen Funktionseinrichtungen an, welche ein hohes Gewicht aufweisen und somit die fahrzeugmittige Lage geboten ist. Zu berücksichtigen ist in diesem Fall die eingeschränkte Zugänglichkeit bei entsprechender Positionierung.

Generell ist es möglich, die obere Bodenplatte 24 mit Durchbrüchen bzw. verschließbaren Öffnungen verschiedenster Art zu versehen, um eine Zugänglichkeit zu den eingebauten Funktionseinrichtungen bzw. Gerätschaften zu ermöglichen. Hierbei können derartige Öffnungen vorteilhaft unter beispielsweise einem auf der unteren Bodenplatte aufliegenden Teppich versteckt sein.

Die **Figur 3** skizziert weiterhin einen Querschnitt durch das beispielhafte Wohnmobil 01 der Ausführung aus Fig. 1 in einem Bereich des Radhauses 10 sowie versetzt am Ende des Doppelbodens 22. Zu erkennen ist zunächst einmal wiederum die obere Bodenplatte 24 sowie beidseitig die Seitenwände 12, 13. Weiterhin sind die Radhäuser 10 zu erkennen, welche einen entsprechenden Bauraum in Anspruch nehmen und insofern an entsprechender Stelle den Funktionsraum 23 einschränken. An unterer Ebene des Doppelbodens 22 befindet sich im Heckbereich mittig der Heckbodenabschnitt 29 sowie beidseitig in nahtlosem Anschluss der hintere Bodenplattenabschnitt 26 und 28.

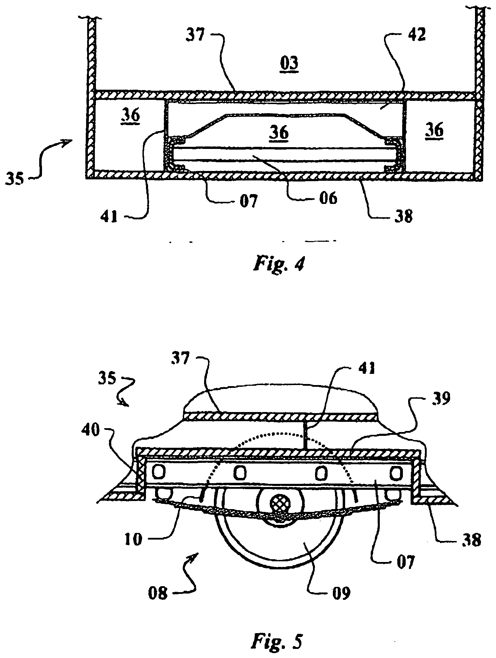

In der **Figur 4** wird eine alternative Ausführungsfonn eines, nicht die Erfindung betreffenden Doppelbodens 35 im Querschnitt skizziert. Zu erkennen ist wiederum die ebene oben liegende Bodenplatte 37, welche den Boden des entsprechenden Wohnbereichs 03 bildet. Im Gegensatz zur vorher beschriebenen Ausführung umfasst der Doppelboden 35 nunmehr eine untere ebene durchgehende Bodenplatte 38, welche sich von rechter bis linker Fahrzeugaußenseite erstreckt. Insofern umfasst die Bodenplatte 38 bei dieser Ausführung in einem Bauteil die erfindungsgemäßen beidseitigen Bodenplattenabschnitte.

Hierbei verläuft die untere Bodenplatte 38 unterhalb des Fahrgestells 06 bzw. unterhalb der Rahmenlängsträger 07. Durch diese Ausführungsform wird ein besonders großer Funktionsraum 36 zur Aufnahme entsprechender Funktionseinrichtungen bzw. Gerätschaften geschaffen. Folglich steht nunmehr ebenso der Bauraum zwischen den Rahmenlängsträgern 07 uneingeschränkt als Funktionsraum 36 zur Verfügung. Als tragende Elemente sowie zur Versteifung und Unterteilung des Funktionsbereichs 36 sind innen liegend senkrechte Wandabschnitte 41 angeordnet sowie Versteifungswände 42. Es ist offensichtlich, dass bei einer derartigen Ausführungsform gemäß Fig. 4 im Gegensatz zu der vorherigen Ausführung gemäß Fig. 1 bis 3 eine vollständige Vormontage des Doppelbodens 35 bzw. des Wohnaufbaus mit Doppelboden 35 unabhängig vom Fahrgestell 06 nicht möglich ist. Vielmehr bedarf es bei der Herstellung in diesem Fall zur Vervollständigung des Doppelbodens 35 den Einschluss des Fahrgestells 06.

Hinsichtlich der Problematik der Radaufhängung 08 skizziert die Fig. 5 in einem Abschnitt eines Längsschnitts eine mögliche Ausführungsform zur Ausführung des Doppelbodens 35 gemäß Fig. 4. Zu erkennen ist oben liegend die obere ebene Bodenplatte 37 sowie ansatzweise beidseitig außen liegend die untere ebene Bodenplatte 38. Für die Radaufhängung 08 eines Rads 09 ist eine entsprechende Änderung der Gestalt der unteren Tragelemente des Doppelbodens 35 erforderlich. Diesbezüglich ist es besonders vorteilhaft auf eine zurersten Ausführung analoge Anordnung einer Tragplatte 39 zurückzugreifen, welche hierbei das Fahrgestell bzw. die Rahmenlängsträger 07 überdeckt. Die Verbindung zwischen der Tragplatte 39 oberhalb der Radaufhängung 08 und der vor und hinter der Radaufhängung 08 liegenden ebenen Bodenplatte 38 wird ebenso mittels senkrecht stehender Wandabschnitte 40 realisiert. Insofern steht ebenso der Bereich zwischen der Tragplatte 39 und der oberen Bodenplatte 37 als Funktionsraum 36 zur Verfügung.

Je nach Gestaltungsart der Radaufhängung sind ebenso weitere Ausführungsmöglichkeiten zur Gestaltung der unteren Tragelemente des Doppelbodens denkbar, so dass insbesondere die untere Bodenplatte möglichst großflächig ausgeführt werden kann, und der nicht von diesem überdeckten Bereich möglichst gering gehalten wird. Unerheblich für die erfindungsgemäße Ausführung ist es auch, ob die untere Bodenplatte einstückig von vorne bis hinten durchgerührt werden kann, oder ob aufgrund der Radaufhängung eine Teilung in einen vorder Radaufhängung liegenden Bereich und hinterder Radaufhängung liegenden Bereich notwendig ist.

## Patentansprüche

1. Fahrzeug (01), insbesondere Wohnmobil oder Wohnwagen, mit einem einen linken und einen rechten Rahmenlängsträger (07) umfassenden Fahrgestell (06) und einem an den Rahmenlängsträgern (07) befestigten Doppelboden (22, 35), welcher obere und untere Tragelemente (22, 24-29, 31 bzw. 37-39) aufweist, wobei die unteren Tragelemente (25-29, 31 bzw. 38, 39) zumindest einen rechten und einen linken ebenen auf gleicher Höhe unterhalb der Rahmenlängsträger (07) liegenden Bodenplattenabschnitt (25-28) umfassen, wobei sich jeweils die Bodenplattenabschnitte (25-28) zwischen Rahmenlängsträger (07) und Fahrzeugaußenseite auf der Länge des Wohnbereichs (03) unter Freisparung eines Radhauses (10) erstrecken und das obere Tragelement (24, 37) eine zumindest abschnittsweise über die Erstreckung eines Wohnbereichs (03) ebene und den Boden des Wohnbereichs (03) bildende obere Bodenplatte (24, 37) ist, wobei zwischen der oberen Bodenplatte (24, 37) und den unteren Tragelementen (25-29, 31 bzw. 38, 39) ein Funktionsraum (23, 36) gebildet wird, wobei der Funktionsraum (23, 36) an der rechten und linken Fahrzeugaußenseite von Seitenwänden (12, 13) und/oder Seitenklappen (20) umgeben ist und hierbei gegenüber der Umgebung thermisch isoliert ist,
**wobei** sich im Heckbereich der Doppelboden (22, 25) über die Rahmenlängsträger (07) hinaus in Fahrzeuglängsrichtung erstreckt, wobei ein Heckbodenabschnitt (29) im Anschluss an die Rahmenlängsträger (07) eben und auf gleicher Höhe die Bodenplattenabschnitte (26, 28) verbindet, die obere Bodenplatte (24, 37) und die unteren Tragelemente (25-29, 31, 39) mit einer Mehrzahl von senkrechten Wandabschnitten (33 bzw. 40-42) verbunden sind,
**dadurch gekennzeichnet,**
**dass** die unteren Tragelemente (25-29, 31 bzw. 38, 39) eine Tragplatte (31, 39) umfassen, welche das Fahrgestell (06) ggf. mit Aussparungen überdeckt und darauf aufliegt, wobei senkrechte Wandabschnitte (32) die Tragplatte (31, 39) mit den Bodenplattenabschnitten (25-28) verbinden.

2. Fahrzeug (01) nach Anspruch 1,
**dadurch gekennzeichnet,**
**dass** im Wesentlichen die den Wohnbereich (03) beidseitig umgebenden Seitenwände (12, 13) zusammen mit Seitenklappen (20) die Seitenwände des Funktionsraums (23, 36) bilden, wobei die jeweilige Seitenwand (12, 13) mit der oberen Bodenplatte (24, 37) und dem Bodenplattenabschnitt (25- 28) verbunden ist.

3. Fahrzeug (01) nach einem der Ansprüche 1 oder 2,
**dadurch gekennzeichnet,**
**dass** auf einem Bodenplattenabschnitt (25-28) zumindest eine für den Einsatz in Wohnmobilen handelsübliche Gasflasche stehend gelagert werden kann.

4. Fahrzeug (01) nach einem der Ansprüche 1 bis 3,
**dadurch gekennzeichnet,**
**dass** der Bodenplattenabschnitt (24-28) im Bereich einer Eingangstür (17) zum Wohnbereich eine Trittstufe (18) bildet.

5. Fahrzeug (01) nach einem der Ansprüche 1 bis 4,
**dadurch gekennzeichnet,**
**dass** die Bodenplattenabschnitte (24-28) und ggf. der Heckbodenabschnitt (29) von einer sich unter Aussparung von Freiräumen für die Radaufhängung (08) und Radhäuser (10) unterhalb des Fahrgestells (06) durchgehend von der einen bis zur anderen Fahrzeugaußenseite erstreckenden unteren Bodenplatte (38) gebildet werden.

6. Fahrzeug (01) nach einem der Ansprüche 1 bis 5,
**dadurch gekennzeichnet,**
**dass** sich im Heckbereich an den Doppelboden (22, 35) eine Garage (04) anschließt, wobei der Garagenboden (30) eben und auf gleicher Höhe am Heckbodenabschnitt (29) bzw. den Bodenplattenabschnitten (25-28) bzw. der unteren Bodenplatte (38) anschließt.

7. Fahrzeug (01) nach Anspruch 6,
**dadurch gekennzeichnet,**
**dass** der zwischen der Garage (04) und dem Radhaus (10) liegende Funktionsraum (23, 36) von der Garage (04) aus frei zugänglich ist.

## Claims

1. A vehicle (01), in particular a campervan or a caravan, having a chassis (06) comprising a left and a right frame side member (07) and having a double bottom (22, 35), which is attached to the frame side members (07) and which has upper and lower bearing elements (22, 24-29, 31 and 37-39, respectively), wherein the lower bearing elements (25-29, 31 and 38, 39, respectively) comprise at least one right and one left planar bottom plate portion (25-28) that is situated on the same level below the frame side members (07), wherein the bottom plate portions (25-28) respectively extend between a frame side member (07) and the outer side of the vehicle over the length of the living area (03), leaving free a wheelhouse (10), and the upper bearing element (24, 37) is an upper bottom plate (24, 37) that is planar at least in portions over the extension of a living area (03) and forms the floor of the living area (03), wherein, between the upper bottom plate (24, 37) and the lower bearing elements (25-29, 31 and 38, 39, respectively), a functional space (23, 36) is formed, wherein the functional space (23, 36) is surrounded, at the right and the left outer side of the vehicle, by side walls (12, 13) and/or side flaps (20), being thermally insulated against the environment at the same time,
**wherein**
in the rear area, the double bottom (22, 25) extends beyond the frame side members (07) in the vehicle longitudinal direction, wherein a rear bottom portion (29), adjoining the frame side members (07), connects the bottom plate portions (26, 28) in a planar manner and on the same level, the upper bottom plate (24, 37) and the lower bearing elements (25-29, 31, 39) are connected to a plurality of vertical wall portions (33 and 40-42, respectively),
**characterised in that**
the lower bearing elements (25-29, 31 and 38, 39, respectively) comprise a bearing plate (31, 39), which covers the chassis (06) with recesses, where required, and rests thereon, wherein vertical wall portions (32) connect the bearing plate (31, 39) to the bottom plate portions (25-28).

2. The vehicle (01) according to claim 1,
**characterised in that**
substantially, the side walls (12, 13) that surround the living area (03) on both sides form the side walls of the functional space (23, 36) together with side flaps (20), wherein the respective side wall (12, 13) is connected to the upper bottom plate (24, 37) and to the bottom plate portion (25- 28).

3. The vehicle (01) according to one of the claims 1 or 2,
**characterised in that**
on a bottom plate portion (25-28), at least one gas bottle that is customary for use in campervans can be stored in an upright manner.

4. The vehicle (01) according to one of the claims 1 to 3,
**characterised in that**
the bottom plate portion (24-28) forms a step tread (18) in the area of an entrance door (17) to the living area.

5. The vehicle (01) according to one of the claims 1 to 4,
**characterised in that**
the bottom plate portions (24-28) and the rear bottom portion (29), where required, are formed by a lower bottom plate (38) that continuously extends from one outer side of the vehicle to the other below the chassis (06), leaving free clearances for the wheel suspension (08) and for the wheelhouses (10).

6. The vehicle (01) according to one of the claims 1 to 5,
**characterised in that**
in the rear area, a garage (04) adjoins the double bottom (22, 35), wherein the garage bottom (30) adjoins the rear bottom portion (29), the bottom plate portions (25-28) and the lower bottom plate (38), respectively, in a planar manner and on the same level.

7. The vehicle (01) according to claim 6,
**characterised in that**
the functional space (23, 36), which is situated between the garage (04) and the wheelhouse (10), can be accessed freely from the garage (04).

## Revendications

1. Véhicule (01), en particulier camping-car ou caravane, ayant un châssis (06) de véhicule comprenant un longeron (07) de cadre gauche et droite et ayant un double fond (22, 35) qui est fixé sur les longerons (07) de cadre et qui a des éléments (22, 24-29, 31 respectivement 37-39) de support supérieurs et inférieurs, les éléments (25-29, 31 respectivement 38, 39) de support inférieurs comprenant au moins une section (25-28) de plaque de fond droite et gauche plane qui est située au même niveau et au-dessous des longerons (07) de cadre, les sections (25-28) de plaque de fond s'étendant respectivement entre un longeron (07) de cadre et le côté extérieur du véhicule sur la longueur de la zone (03) d'habitation, en laissant libre un passage (10) de roue, et l'élément (24, 37) de support supérieur étant une plaque (24, 37) de fond supérieure qui est plane au moins par sections sur l'étendue d'une zone (03) d'habitation et qui forme le fond de la zone (03) d'habitation, un espace (23, 36) fonctionnel étant formé entre la plaque (24, 37) de fond supérieure et les éléments (25-29, 31 respectivement 38, 39) de support inférieurs, l'espace (23, 36) fonctionnel étant entouré, du côté extérieur du véhicule droit et gauche, de parois (12, 13) latérales et/ou de rabats (20) latéraux, en même temps étant isolé thermiquement par rapport à l'environnement,
**dans lequel**
dans la zone arrière, le double fond (22, 25) s'étend dans la direction longitudinale du véhicule au-delà des longerons (07) de cadre, une section (29) de fond arrière, touchant aux longerons (07) de cadre, reliant les sections (26, 28) de plaque de fond de manière plane et au même niveau, la plaque (24, 37) de fond supérieure et les éléments (25-29, 31, 39) de support inférieurs sont reliés avec une pluralité de sections (33 respectivement 40-42) de paroi verticales,
**caractérisé en ce que**
les éléments (25-29, 31 respectivement 38, 39) de support inférieurs comprennent une plaque (31, 39) de support qui recouvre le châssis (06) de véhicule d'échancrures, le cas échéant, et qui reste sur le même, des sections (32) de paroi verticales reliant la plaque (31, 39) de support avec les sections (25-28) de plaque de fond.

2. Véhicule (01) selon la revendication 1,
**caractérisé en ce que**
pour l'essentiel, les parois (12, 13) latérales qui entourent la zone (03) d'habitation des deux côtés forment les parois latérales de l'espace (23, 36) fonctionnel ensemble avec des rabats (20) latéraux, la paroi (12, 13) latérale respective étant reliée avec la plaque (24, 37) de fond supérieure et avec la section (25- 28) de plaque de fond.

3. Véhicule (01) selon l'une quelconque des revendications 1 ou 2,
**caractérisé en ce que**
sur une section (25-28) de plaque de fond, au moins une bouteille à gaz comme usuel pour l'utilisation dans des camping-cars peut être logée verticalement.

4. Véhicule (01) selon l'une quelconque des revendications 1 à 3,
**caractérisé en ce que**
la section (24-28) de plaque de fond forme un marchepied (18) dans la zone d'une porte (17) d'entrée de la zone d'habitation.

5. Véhicule (01) selon l'une quelconque des revendications 1 à 4,
**caractérisé en ce que**
les sections (24-28) de plaque de fond et, le cas échéant, la section (29) de fond arrière sont formées par une plaque (38) de fond inférieure qui s'étend de manière continue à partir d'un côté extérieur du véhicule jusqu'à l'autre côté extérieur du véhicule au-dessous du châssis (06) de véhicule, en laissant libre des espaces libres pour la suspension (08) et les passages (10) de roues.

6. Véhicule (01) selon l'une quelconque des revendications 1 à 5,
**caractérisé en ce que**
dans la zone arrière, un garage (04) touche au double fond (22, 35), le fond (30) de garage touchant à la section (29) de fond arrière respectivement aux sections (25-28) de plaque de fond respectivement à la section (38) de fond inférieure de manière plane et au même niveau.

7. Véhicule (01) selon la revendication 6,
**caractérisé en ce que**
l'espace fonctionnel (23, 36) qui est situé entre le garage (04) et le passage (10) de roue est librement accessible du garage (04).
